(19) Europäisches Patentamt
European Patent Office
Office européen des brevets

(11) **EP 4 135 217 A1**

(12) **EUROPEAN PATENT APPLICATION**
published in accordance with Art. 153(4) EPC

(43) Date of publication:
**15.02.2023 Bulletin 2023/07**

(21) Application number: **21883312.7**

(22) Date of filing: **21.10.2021**

(51) International Patent Classification (IPC):
**H04B 7/185** (1974.07)      **H04W 36/00** (2009.01)
**H04W 36/22** (2009.01)      **H04W 84/06** (2009.01)

(52) Cooperative Patent Classification (CPC):
**H04B 7/185; H04W 36/00; H04W 36/22;**
**H04W 84/06**

(86) International application number:
**PCT/KR2021/014860**

(87) International publication number:
**WO 2022/086244 (28.04.2022 Gazette 2022/17)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.10.2020 KR 20200137255**

(71) Applicant: **Samsung Electronics Co., Ltd.**
**Gyeonggi-do 16677 (KR)**

(72) Inventors:
• **JUNG, Sangyeob**
  **Suwon-si Gyeonggi-do 16677 (KR)**
• **KIM, Soenghun**
  **Suwon-si Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **METHOD AND DEVICE FOR PERFORMING EPHEMERIS-BASED CELL RESELECTION IN SATELLITE NETWORK**

(57)     The present disclosure relates to: a communication technique merging, with IoT technology, a 5G communication system for supporting a data transmission rate higher than that of a 4G system; and a system therefor. The present disclosure can be applied to intelligent services (for example, smart homes, smart buildings, smart cities, smart cars or connected cars, healthcare, digital education, retail, security- and safety-related services, and the like) on the basis of 5G communication technology and IoT-related technology. According to one embodiment of the present disclosure, provided are a method by which a terminal performs cell reselection in a satellite network (or a non-terrestrial network), and a device.

FIG. 7

**Description**

[Technical Field]

The disclosure relates to a terminal and a base station in a communication system and, more specifically, to a method and a device for performing cell reselection in a satellite network (or a non-terrestrial network (NTN)).

[Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems. In addition, in 5G communication systems, development for system network improvement is under way based on advanced small cells, cloud radio access networks (cloud RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

[Disclosure]

[Technical Problem]

Unlike the conventional terrestrial network, there is a small difference in a reception signal strength between a case where a terminal supporting a satellite network (or a non-terrestrial network (NTN)) is positioned at a cell center in the satellite network and a case where the terminal is positioned in a cell edge in the satellite network, and thus a problem of reselection of a neighbor cell or a frequency ping-pong cell reselection issue may occur even when the terminal is at the cell center. Accordingly, a method and a device for performing a cell reselection procedure in the NTN need to be proposed.

[Solution to Problem]

To solve the problem above, according to an embodiment of the disclosure, a method of a terminal in an NTN is provided. The method of the terminal includes: receiving configuration information including at least one cell reselection parameter from a serving cell of a base station; identifying a cell reselection condition, based on the at least one cell reselection parameter and position information of the serving cell; and performing reselection by selecting a new cell, based on the cell reselection condition.

In addition, according to an embodiment of the disclosure, a terminal of an NTN is provided. The terminal includes: a transceiver; and a controller which is connected to the transceiver, receives configuration information including at least one cell reselection parameter from a serving cell of a base station, identifies a cell reselection condition, based on the at least one cell reselection parameter and position information of the serving cell, and performs reselection by selecting a new cell, based on the cell reselection condition.

[Advantageous Effects of Invention]

According to various embodiments of the disclosure, a terminal in an NTN can more efficiently perform a cell reselection procedure. Specifically, a terminal can perform a cell reselection procedure in consideration of satellite ephemeris, thereby solving problem which may be caused during cell reselection in the NTN.

Advantageous effects obtainable from the disclosure may not be limited to the above mentioned effects, and other effects which are not mentioned may be clearly understood, through the following descriptions, by those skilled in the art to which the disclosure pertains.

[Brief Description of Drawings]

The above and other aspects, features, and advantages of the disclosure will be more apparent from the following description of embodiments of the disclosure in conjunction with the accompanying drawings, in which:

FIG. 1 illustrates a structure of an LTE system according to an embodiment of the disclosure;
FIG. 2 illustrates a radio protocol structure in an LTE system according to an embodiment of the disclosure;
FIG. 3 illustrates a structure of a next-generation mobile communication system according to an embodiment of the disclosure;
FIG. 4 illustrates a radio protocol structure in a next-generation mobile communication system according to an embodiment of the disclosure;
FIG. 5 illustrates a process of releasing a connection of a terminal and switching a mode from an RRC connected mode (RRC_CONNECTED) to an RRC inactive mode (RRC_INACTIVE) or an RRC idle mode (RRC_IDLE) by a base station, and then performing a cell reselection procedure by the terminal in the RRC inactive mode (RRC_INACTIVE) or the RRC idle mode (RRC_IDLE);
FIG. 6 illustrates comparison of reception signal strengths between a case where a terminal is positioned at a cell center and a case where a terminal is positioned at a cell edge in a terrestrial network or an NTN;
FIG. 7 illustrates a process of releasing a connection of a terminal and switching a mode of the terminal from an RRC-connected mode (RRC_CONNECTED) to an RRC inactive mode (RRC_INACTIVE) or an RRC idle mode (RRC _IDLE) by a base station, and then performing a satellite cell reselection procedure by the terminal according to an embodiment of the disclosure;
FIG. 8 is a block diagram illustrating a structure of a terminal according to an embodiment of the disclosure; and
FIG. 9 is a diagram illustrating a structure of a base station according to an embodiment of the disclosure.

[Mode for Invention]

Hereinafter, the operation principle of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description, the disclosure will be described using terms and names defined in the 3rd generation partnership project long term evolution (3GPP LTE) standards for the convenience of description. However, the disclosure is not limited by these terms and names, and may be applied in the same way to systems that conform other standards. In the disclosure, the term "eNB" may be interchangeably used with the term "gNB". That is, a base station described as "eNB" may indicate "gNB".

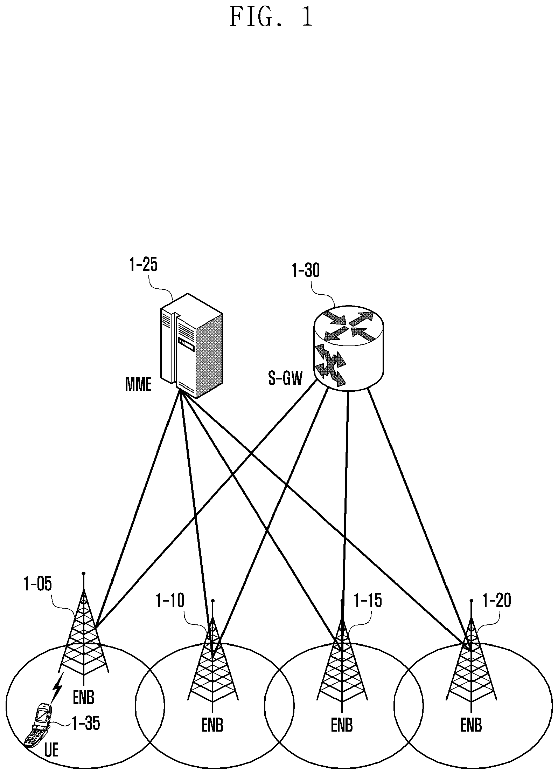

FIG. 1 illustrates a structure of an LTE system according to an embodiment of the disclosure.

Referring to FIG. 1, as illustrated, a radio access network of an LTE system includes next-generation base stations (evolved Node Bs, hereinafter, referred to as "ENBs", "Node Bs", or "base stations") 1-05, 1-10, 1-15, and 1-20, a mobility management entity (MME) 1-25, and a serving gateway (S-GW) 1-30. A user equipment (hereinafter, referred to as a "UE" or a "terminal") 1-35 accesses an external network through the ENBs 1-05 to 1-20 and the S-GW 1-30.

In FIG. 1, the ENBs 1-05 to 1-20 correspond to the conventional Node Bs of a universal mobile telecommunication system (UMTS). The ENB is connected to the LTE 1-35 via a radio channel, and performs more complex functions than the conventional Node B. In the LTE system, all user traffics including real-time services such as voice over Internet protocol (VoIP) via Internet protocol are serviced through a shared channel, and thus a device for collecting state information such as buffer state information of UEs, available transmission power state information of UEs, and channel state information of UEs, and performing scheduling is required, and each of the ENBs 1-05 to 1-20 serves as such a device. A single ENB generally controls multiple cells. For example, the LTE system uses a radio-access technology such as orthogonal frequency-division multiplexing (hereinafter, referred to as "OFDM") in a bandwidth of 20 MHz to achieve a data rate of 100 Mbps. In addition, the LTE system also applies an adaptive modulation & coding (hereinafter, referred to as "AMC") scheme for determining a modulation scheme and a channel-coding rate in accordance with the channel state of a terminal. The S-GW 1-30 is a device for providing a data bearer, and generates or releases the data bearer under the control of the MME 1-25. The MME is a device for performing a mobility management function and various control functions for a terminal, and is connected to multiple base stations.

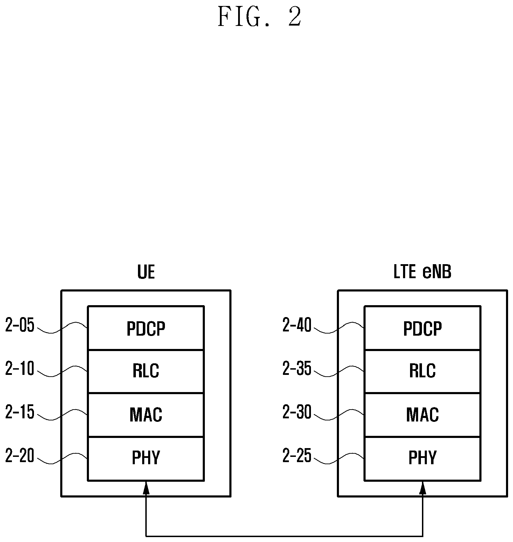

FIG. 2 illustrates a radio protocol structure in an LTE system according to an embodiment of the disclosure.

Referring to FIG. 2, the radio protocol in the LTE system includes packet data convergence protocols (PDCPs) 2-05 and 2-40, radio link controls (RLCs) 2-10 and 2-35, and medium access controls (MACs) 2-15 and 2-30 in a terminal and an ENB, respectively. The packet data convergence protocols (PDCPs) 2-05 and 2-40 perform operations of IP header compression/recovery and the like. The main functions of the PDCP are summarized below:

- Header compression and decompression: ROHC only
- Transfer of user data
- In-sequence delivery of upper layer PDUs at PDCP re-establishment procedure for RLC AM
- For split bearers in DC(only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink.

The radio link controls (hereinafter, referred to as "RLCs") 2-10 and 2-35 reconfigure a PDCP packet data unit (PDU) at an appropriate size to perform an ARQ operation or the like. The main functions of the RLC are summarized below:

- Transfer of upper layer PDUs
- Error Correction through ARQ (only for AM data transfer)
- Concatenation, segmentation, and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection(only for UM and AM data transfer)
- Protocol error detection(only for AM data transfer)
- RLC SDU discard (only for UM and AM data transfer)
- RLC re-establishment.

The MACs 2-15 and 2-30 are connected to several RLC layer devices configured in one terminal, and perform an operation of multiplexing RLC PDUs into a MAC PDU and demultiplexing the RLC PDUs from the MAC PDU. The main functions of the MAC are summarized below:

- Mapping between logical channels and transport channels
- Multiplexing/demultiplexing of MAC SDUs belonging to one or different logical channels into/from transport blocks (TBs) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding.

Physical layers 2-20 and 2-25 generate an OFDM symbol by performing channel-coding and modulating of upper-layer data, and transmit the same through a radio channel, or perform demodulating and channel-decoding of the OFDM symbol received through the radio channel, and transmit the same to an upper layer.

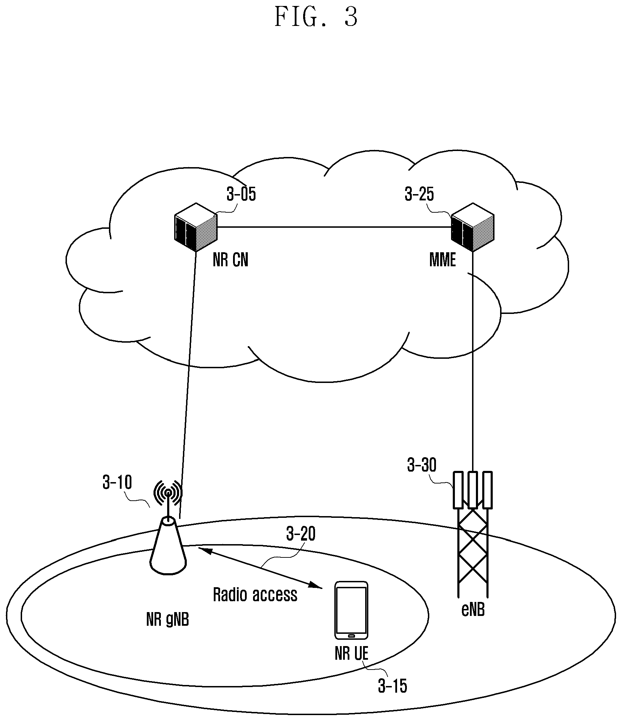

FIG. 3 illustrates a structure of a next-generation mobile communication system according to an embodiment of the disclosure.

Referring to FIG. 3, as illustrated, a radio access network in the next-generation mobile communication system (hereinafter referred to as "new radio (NR)" or "2G") includes a next-generation base station (a new-radio node B, hereinafter, referred to as an "NR gNB" or an "NR base station") 3-10 and a new-radio core network (NR CN) 3-05. A user equipment (a new-radio user equipment, hereinafter, referred to as an "NR UE" or an "NR terminal") 3-15 accesses an external network through the NR gNB 3-10 and the NR CN 3-05.

In FIG. 3, the NR gNB 3-10 corresponds to an evolved node B (eNB) in the conventional LTE system. The NR gNB 3-15 is connected to the NR UE 3-15 through a radio channel, and thus provides service superior to that of the conventional node B. In the next-generation mobile communication system, all user traffic is serviced through shared channels, and thus a device for collecting state information, such as buffer state information of UEs, available transmission power state information of UEs, and channel state information of UEs, and performing scheduling is required, and the NR NB 3-10 serves as such a device. A single NR gNB generally controls multiple cells. In order to implement ultra-high-speed data transmission as compared with the conventional LTE, a bandwidth that is equal to or higher than the conventional maximum bandwidth is applied, and a beamforming technology may be additionally combined using orthogonal frequency-division multiplexing (OFDM) as radio connection technology. In addition, an adaptive modulation & coding (AMC) scheme that determines a modulation scheme and a channel-coding rate in accordance with the channel state of the terminal is applied. The NR CN 3-05 performs a function such as mobility support, bearer configuration, and quality of service (QoS) configuration. The NR CN is a device that performs not only terminal mobility management functions but also various types of control functions, and is connected to multiple base stations. In addition, the next-generation mobile communication system may be linked with the conventional LTE system, and the NR CN is connected to the MME 3-25 through a network interface. The MME is connected to an eNB 3-30 corresponding to the conventional base station.

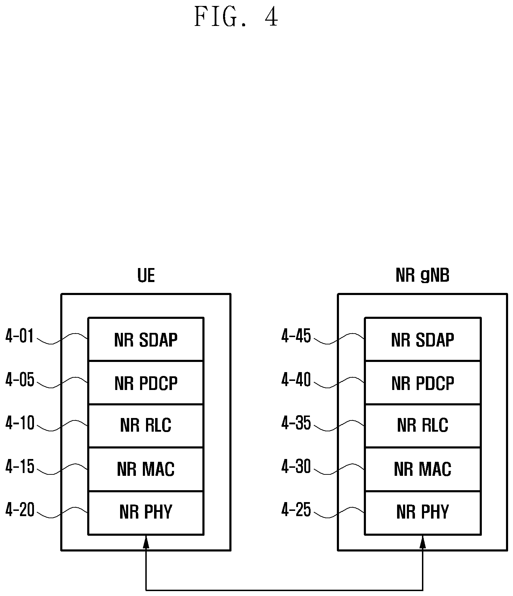

FIG. 4 illustrates a radio protocol structure in a next-generation mobile communication system according to an embodiment of the disclosure.

Referring to FIG. 4, in the radio protocol in the next-generation mobile communication system, a terminal and an NR base station include NR service data adaptation protocols (SDAPs) 4-01 and 4-45, NR packet data convergence protocols (PDCPs) 4-05 and 4-40, NR radio link controls (RLCs) 4-10 and 4-35, and NR medium access controls (MACs) 4-15 and 4-30, respectively.

The main functions of the NR SDAPs 4-01 and 4-45 may include some of the following functions:

- Transfer of user plane data
- Mapping between a QoS flow and a DRB for both DL and UL
- Marking QoS flow ID in both DL and UL packets
- Reflective QoS flow to DRB mapping for the UL SDAP PDUs.

For an SDAP-layer device, the terminal may receive, through a radio resource control (RRC) message, a configuration as to whether to use a header of the SDAP-layer device or to use a function of the SDAP-layer device for each PDCP layer device, each bearer, or each logical channel. When an SDAP header is configured, the terminal may be indicated to update or reconfigure, with a non-access stratum (NAS) reflective QoS 1-bit indicator and an access stratum (AS) reflective QoS 1-bit indicator of the SDAP header, mapping information for uplink and downlink QoS flows and a data bearer. The SDAP header may include QoS flow ID information indicating the QoS. The QoS information may be used as data-processing priority, scheduling information, or like in order to support a smooth service.

The main functions of the NR PDCPs 4-05 and 4-40 may include some of the following functions:

- Header compression and decompression: ROHC only

- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above description, the reordering function of the NR PDCP device refers to a function of sequentially rearranging PDCP PDUs received in a lower layer, based on a PDCP sequence number (SN). The reordering function of the NR PDCP device may include: a function of delivering data to an upper layer in the rearranged order; a function of directly delivering data without considering an order; a function of recording lost PDCP PDUs by rearranging an order; a function of reporting a state of the lost PDCP PDUs to a transmission end; and a function of requesting retransmission of the lost PDCP PDUs.

The main functions of the NR RLCs 4-10 and 4-35 may include some of the following functions:

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment.

In the above description, the in-sequence delivery function of the NR RLC device refers to a function of sequentially delivering RLC SDUs received from a lower layer, to an upper layer. When a single RLC SDU is divided into multiple RLC SDUs and the divided multiple RLC SDUs are received, the in-sequence delivery function of the NR RLC device may include a function of rearranging and delivering the same. The in-sequence delivery function of the NR RLC device may include: a function of rearranging the received RLC PDUs, based on an RLC sequence number (SN) or a PDCP sequence number (SN); a function of recording lost RLC PDUs by rearranging an order; a function of reporting the state of the lost RLC PDUs to a transmission end; and a function of requesting retransmission of the lost RLC PDUs. When there is a lost RLC SDU, the in-sequence delivery function of the NR RLC device may include a function of sequentially delivering only RLC SDUs preceding the lost RLC SDU to the upper layer. Alternatively, when there is a lost RLC SDU but the timer expires, the in-sequence delivery function of the NR RLC device may include a function of sequentially delivering, to the upper layer, all RLC SDUs received before a predetermined timer starts. Alternatively, when there is a lost RLC SDU but the predetermined timer expires, the in-sequence delivery function of the NR RLC device may include a function of sequentially delivering, to the upper layer, all currently received RLC SDUs. In addition, the NR RLC device may process the RLC PDUs in the received order (in an arriving order, regardless of the order of serial numbers or sequence numbers), and may deliver the processed RLC PDUs to the PDCP device regardless of order (Out-of-sequence delivery), and when the NR RLC device receives a segment, the NR RLC device may receive segments which are stored in a buffer or are to be received later, reconfigure the segments into one complete RLC PDU, and then deliver the same to the PDCP device. The NR RLC layer may not include a concatenation function and may perform the function in the NR MAC layer or may replace the function with a multiplexing function of the NR MAC layer.

In the above description, the out-of-sequence delivery function of the NR RLC device refers to a function of directly delivering, to the upper layer regardless of order, the RLC SDUs received from the lower layer. When a single RLC SDU is divided into multiple RLC SDUs and the divided multiple RLC SDUs are received, the out-of-sequence delivery function of the NR RLC device may include a function of rearranging and delivering the divided multiple RLC SDUs. The out-of-sequence delivery function of the NR RLC device may include a function of storing the PDCP SN or the RLC SN of each of the received RLC PDUs, arranging the RLC PDUs, and recording the lost RLC PDUs.

The NR MACs 4-15 and 4-30 may be connected to several NR RLC layer devices configured in one terminal, and the main functions of the NR MAC may include some of the following functions:

- Mapping between logical channels and transport channels

- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding.

NR Physical layers (NR PHYs) 4-20 and 4-25 may generate an OFDM symbol by performing channel-coding and modulating of upper-layer data, and transmit the same through a radio channel, or may perform demodulating and channel-decoding of the OFDM symbol received through the radio channel, and transmit the same to the upper layer.

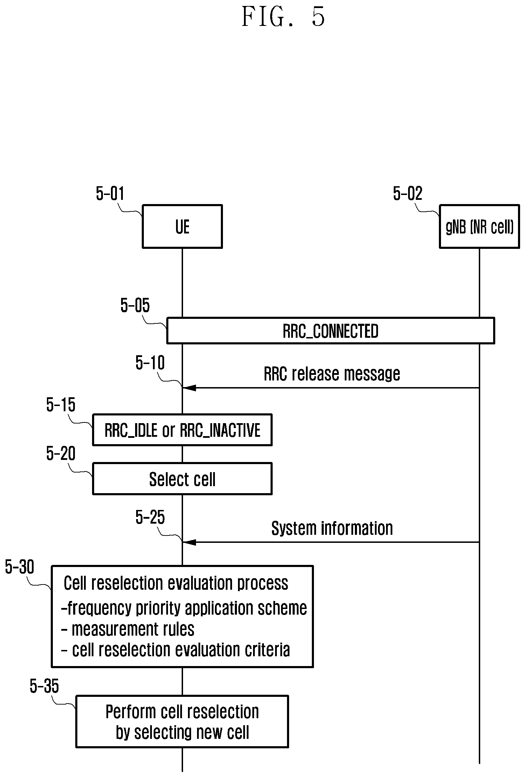

FIG. 5 illustrates a process of releasing a connection of a terminal and switching a mode from an RRC connected mode (RRC_CONNECTED) to an RRC inactive mode (RRC_INACTIVE) or an RRC idle mode (RRC_IDLE) by a base station, and then performing a cell reselection procedure by the terminal in the RRC inactive mode (RRC _INACTIVE) or the RRC idle mode (RRC_IDLE).

In the disclosure, a cell reselection procedure (or a cell reselection process) may correspond to a process of determining whether to maintain a current serving cell or perform cell reselection by selecting a neighbor cell when the service quality of the serving cell of the terminal in the RRC idle mode or the RRC inactive mode gets lower than that of the neighbor cell due to a predetermined reason or moving of the terminal.

In a case of handover, whether to perform a handover operation is determined by a network (an MME, an access and mobility management function (AMF), a source eNB, or a source gNB). However, in a case of cell reselection, a terminal itself can determine whether to perform a cell reselection operation by using a cell measurement value. A cell selected for cell reselection as the terminal moves may mean a cell using the same NR intra-frequency as that of a currently camped-on serving cell, a cell using an NR inter-frequency that is different from that of the serving cell, or a cell using an inter-RAT frequency used in another a radio access technology (hereinafter, referred to as "RAT").

Referring to FIG. 5, a terminal 5-01 may be in an RRC-connected mode (RRC_CONNECTED) (operation 5-05).

In operation 5-10, the terminal 5-01 in the RRC-connected mode may receive an RRC release message from a base station 5-02. The message may include inactive configuration information (for example, suspendConfig). The message may include one piece of cell reselection priority configuration information per frequency for each RAT (for example, NR EUTRA, UTRA-FDD, UTRA-TDD, etc.) and a timer value (for example, a t320 timer value) which can be commonly applied regardless of the RAT.

In operation 5-15, the terminal may transition to (or enter into) the RRC inactive mode (RRC_INACTIVE) or the RRC idle mode (RRC_IDLE) according to whether the RRC release message received in operation 5-10 includes the inactive configuration information. For example, when the RRC release message including the inactive configuration information has been successfully received, the terminal in the RRC-connected mode may transition to the RRC inactive mode. However, when the RRC release message not including the inactive configuration information has been successfully received, the terminal in the RRC-connected mode may transition to the RRC idle mode.

In operation 5-20, the terminal may perform a cell selection process in the RRC idle mode or the RRC inactive mode. The cell selection process may mean a procedure of searching a selected public land mobile network (PLMN) or a stand-alone non-public network (SNPN) for a suitable cell and camping on the cell, and the cell which is found as a suitable cell in the RRC idle mode or the RRC inactive mode and on which the terminal has camped may be referred to as a serving cell. The terminal may receive system information (for example, MIB and/or SIB1) broadcasted in the cell, so as to perform the cell selection process. For example, the terminal may select a cell through cell selection criteria (referred to as S criteria or Equation 1). For example, a cell satisfying Equation 1 below may be selected.

[Equation 1]

$$Srxlev > 0 \text{ AND } Squal > 0$$

where:

$$Srxlev = Q_{rxlevmeas} - (Q_{rxlevmin} + Q_{rxlevminoffset}) - P_{compensation} - Qoffset_{temp}$$

$$\text{Squal} = Q_{qualmeas} - (Q_{qualmin} + Q_{qualminoffset}) - Qoffset_{temp}$$

The definitions of parameters used in Equation 1 may refer to 3GPP standard document TS 38.304, and the parameters may be included in the system information (for example, SIB1 and SIB2) broadcasted by the cell. Hereinafter, the same parameters may be used for other embodiments of the disclosure to which Equation 1 is applied.

For example, Srxlev may denote a cell selection reception level value (dB unit), Squal may denote a cell selection quality value (dB unit), $Q_{rxlevmeas}$ may denote a measured cell reception level value (RSRP), $Q_{rxlevmin}$ may denote a reception level value (dBm unit) required as minimum for a cell, $Q_{rxlevminoffset}$ may denote an offset for $Q_{rxlevmin}$ in consideration of Srxlev evaluation, $P_{compensation}$ may denote a compensation power value, $Q_{offsettemp}$ may denote an offset temporarily applied to a cell, $Q_{qualmin}$ may denote a quality level (dB unit) required as minimum for a cell, and $Q_{qualminoffset}$ may denote an offset for $Q_{qualmin}$ in consideration of Squal evaluation.

In operation 5-25, the terminal may acquire (or receive) system information (SIB3, SIB4, ..., SIB8, and SIB24). The system information may include one piece of cell reselection priority configuration information per frequency for each RAT and a cell reselection parameter. For example, SIB2 may include information (or parameter) commonly applied when the terminal in the RRC idle mode or the RRC inactive mode performs cell reselection by selecting NR intra-frequency, NR inter-frequency, and inter-RAT frequency cells. For example, SIB3 may include information/parameter applied only when the terminal in the RRC idle mode or the RRC inactive mode performs cell reselection by selecting an NR intra-frequency cell. For example, SIB4 may include information/parameter applied only when the terminal in the RRC idle mode or the RRC inactive mode performs cell reselection by selecting an NR inter-frequency cell. For example, SIB5 may include information/parameter applied only when the terminal in the RRC idle mode or the RRC inactive mode performs cell reselection by selecting an LTE frequency (inter-RAT frequency) cell.

In operation 5-30, the terminal may perform a cell reselection evaluation process. The cell reselection evaluation process may mean a series of procedures below:

- Frequency priority application scheme (Reselection priorities handling)
- Measurement rules for cell reselection
- Cell reselection evaluation criteria (Cell reselection criteria)

The frequency priority application scheme may be determined according to whether the RRC connection release message received by the terminal in operation 5-10 includes the cell reselection priority configuration information per frequency for each RAT and the timer value commonly applied to the RATs. For example, a frequency priority may be determined according to the scheme below. The below scheme is merely provided as an example, the disclosure is not limited thereto, and the frequency priority may be determined based on various schemes.

- In a case in which the RRC connection release message includes one piece of cell reselection priority configuration information per frequency for each RAT and a timer value commonly applied to the RATs, while the timer T320 is operated, a frequency priority may be determined by ignoring the cell reselection priority configuration information per frequency for each RAT, the information being included in the system information acquired in operation 5-25 and by applying the cell reselection priority configuration information included in the RRC connection release message. When the timer T320 expires, a frequency priority may be determined by applying the cell reselection priority configuration information per frequency for each RAT, the information being included in the system information acquired in operation 5-25.
- When the RRC connection release message includes one piece of cell reselection priority configuration information per frequency for each RAT and does not include a timer value commonly applied to the RATs, a frequency priority may be determined by ignoring the cell reselection priority configuration information per frequency for each RAT, the information being included in the system information acquired in operation 5-25 and by applying the cell reselection priority configuration information included in the RRC connection release message.
- When the RRC connection release message includes neither one piece of cell reselection priority configuration information per frequency for each RAT nor a timer value commonly applied to the RATs, a frequency priority may be determined by applying the cell reselection priority configuration information per frequency for each RAT, the information being included in the system information acquired in operation 5-25.

According to the measurement rule, for a predetermined reason or for minimizing the battery consumption, the terminal may perform neighbor cell measurement based on the following measurement rule by applying the frequency priority. The following measurement rule is merely provided as an example, the disclosure is not limited thereto, and the terminal may perform neighbor cell measurement based on various measurement rules.

- If a reception level and a reception quality of a serving cell are greater than thresholds ($S_{rxlev} > S_{IntraSearchP}$ and $S_{qual} > S_{IntraSearchQ}$), the terminal may not perform NR intra-frequency measurement. Otherwise, the terminal may perform the NR intra-frequency measurement. Here, $S_{IntraSearchP}$ may denote an Srxlev threshold value for the NR intra-frequency measurement, and $S_{IntraSearchQ}$ may denote an $S_{qual}$ threshold value for the NR intra-frequency measurement.

- With respect to the NR inter-frequency or inter-RAT frequency having a higher cell reselection priority than that of the current serving cell frequency, the terminal may perform neighbor cell measurement according to 3GPP standard document TS 38.133.

- If a reception level and a reception quality of a serving cell are greater than thresholds ($S_{rxlev} > S_{nonIntraSearchP}$ and Squal > $S_{nonIntraSearchQ}$), the terminal may not perform measurement for the NR inter-frequency having a cell reselection priority equal to or lower than that of the current serving cell frequency or for the inter-RAT frequency having a cell reselection priority higher than that of the current serving cell frequency. Otherwise, the terminal may perform neighbor cell measurement for the NR inter-frequency or the inter-RAT frequency having a cell reselection priority equal to or lower than that of the current serving cell frequency according to 3GPP standard document TS 38.133. For reference, the thresholds (for example, the above-described $S_{IntraSearchP}$, $S_{IntraSearchQ}$, $S_{nonIntraSearchP}$, and $S_{nonIntraSearchQ}$) and the reception level and reception quality of the serving cell may be acquired or derived through the system information received in operation 5-30.

Here, $S_{nonIntraSrachP}$ may denote an Srxlev threshold for the NR inter-frequency or inter-RAT frequency measurement, and $S_{nonIntraSearchQ}$ may denote an Squal threshold for the NR inter-frequency or inter-RAT frequency measurement.

In relation to the cell reselection evaluation criteria, different cell reselection evaluation criteria may be applied depending on the frequency priority determined by the terminal. Specifically, the terminal may apply different cell reselection criteria for the following cases. The disclosure is not limited to the following cases merely provided as an example, and there may be various cases in applying the cell reselection criteria.

■ First case:

● A case in which there is at least one NR frequency or inter-RAT frequency having a higher priority than that of a current serving frequency

■ Second case:

● A case in which there is at least one NR frequency or inter-RAT frequency having a lower priority than that of a current serving frequency

■ Third case:

● A case of a current serving frequency or a case in which there is at least one NR inter-frequency having a priority equal to that of the current serving frequency

■ Fourth case:

● A case in which there are multiple NR cells satisfying the cell reselection criteria according to the first case or the second case

When multiple cells satisfying the cell reselection criteria have different priorities, the terminal may perform cell reselection by prioritizing the RAT/frequency having a higher priority over the RAT/frequency having a lower priority (Cell reselection to a higher priority RAT/frequency shall take precedence over a lower priority RAT/frequency if multiple cells of different priorities fulfil the cell reselection criteria). For example, the terminal may perform cell reselection by prioritizing the first case or the fourth case caused by the first case. When the first and fourth cases caused by the first case are not satisfied, the terminal may perform cell reselection upon the third case. When the first case, the fourth case caused by the first case, and third cases are not satisfied, the terminal may perform cell reselection upon the second case or the fourth case caused by the second case.

When the cell reselection criteria upon the first case needs to be applied, the terminal in the RRC idle mode or the RRC inactive mode may apply higher priority NR Inter-frequency and inter-RAT cell reselection criteria. Here, the higher priority NR Inter-frequency and inter-RAT cell reselection criteria may be described as follows:

- If the Thresh$_{Serving, LowQ}$ is broadcasted through the system information (for example, SIB2) that is broadcasted in a serving cell, and the terminal has camped on the current serving cell for over one second (here, $\text{Thresh}_{\text{Serving, LowQ}}$ may denote a Squal threshold value used for the serving cell when reselection is performed for the lower priority),

● The terminal may determine whether one or multiple cells in each frequency satisfy condition A below and derive a candidate target cell list for each frequency. A $\text{Treselection}_{\text{RAT}}$ parameter and a $\text{Thresh}_{\text{X,HighQ}}$ parameter used in condition A may be included in the system information. For example, for a cell in the NR frequency having a higher priority than that of the serving frequency, SIB4 may include the parameter values, and for a cell in the inter-RAT frequency having a higher priority than that of the serving frequency, SIB5 may include the parameter values. Here, $\text{Treselection}_{\text{RAT}}$ may denote a cell reselection timer value, and $\text{Thresh}_{\text{X,HighQ}}$ may denote a Squal threshold value when reselection is performed for the RAT or frequency having a higher priority than that of the serving frequency.

■ Condition A: A case in which a reception quality (Squal) of a cell in the NR frequency or an E-UTRAN RAT cell having a higher priority has a value greater than $\text{Thresh}_{\text{X,HighQ}}$ for a $\text{Treselection}_{\text{RAT}}$ interval (a cell of a higher priority NR or E-UTRAN RAT/frequency fulfils Squal > $\text{Thresh}_{\text{X,HighQ}}$ during a time internal $\text{Treselection}_{\text{RAT}}$)

- Otherwise,

● The terminal may determine whether one or multiple cells in each frequency satisfy condition B below and derive a candidate target cell list for each frequency. A $\text{Treselection}_{\text{RAT}}$ parameter and a $\text{Thresh}_{\text{X,HighP}}$ parameter used in condition B may be included in the system information. For example, for a cell in the NR frequency having a higher priority than that of the serving frequency, SIB4 may include the parameter values, and for a cell in the inter-RAT frequency having a higher priority than that of the serving frequency, SIB5 may include the parameter values. Here, $\text{Thresh}_{\text{X,HighP}}$ may denote a Squal threshold value when reselection is performed for the RAT or frequency having a higher priority than that of the serving frequency.

■ Condition B: A case in which the terminal has camped on the current serving cell for over one second (more than 1 second has elapsed since the UE camped on the current serving cell), and a reception level (Srxlevel) of a RAT cell or a frequency cell having a higher priority has a value greater than $\text{Thresh}_{\text{X,HighP}}$ for a $\text{Treselection}_{\text{RAT}}$ interval (a cell of a higher priority RAT/frequency fulfils Srxlev > $\text{Thresh}_{\text{X,HighP}}$ during a time internal $\text{Treselection}_{\text{RAT}}$)

Whether there are multiple cells satisfying the higher priority NR Inter-frequency and inter-RAT cell reselection criteria may be determined. In this case, the multiple cells may refer to multiple cells in one frequency (highest-priority frequency) having the highest priority, or in a case where there are multiple frequencies (highest-priority frequencies) having the highest priority and there are one or multiple cells for each frequency, the multiple cells may refer to multiple cells for the entire frequency, which satisfies the case above. In a case where there are multiple cells, when the highest-priority frequency corresponds to the NR frequency, the terminal may additionally derive a cell-specific ranking to perform cell reselection by selecting the highest ranked cell. That is, when the cell reselection criteria need to be applied upon the fourth case caused by the first case, cell reselection may be performed by selecting the highest ranked cell according to the following conditions.

The terminal may perform ranking of all cells satisfying cell selection criteria (The UE shall perform ranking of all cells that fulfil the cell selection criterion S).

For the cells satisfying the cell selection criteria, the terminal may derive ranks for cells, based on an RSRP measurement value. The ranks of the serving cell and the neighbor cell may be obtained according to Equation 2 below.

The serving cell rank and the neighbor cell rank may be obtained according to Equation 2 below. In the disclosure, the serving cell rank may be referred to as $R_s$, and the neighboring cell rank may be referred to as $R_n$.

[Equation 2]

$$R_s = Q_{\text{meas,s}} + Q_{\text{hyst}} - Q_{\text{offset}_{\text{temp}}}$$

$$R_n = Q_{\text{meas,n}} - Q_{\text{offset}} - Q_{\text{offset}_{\text{temp}}}$$

Here, $Q_{\text{meas}}$ ($Q_{\text{meas,s}}$ and $Q_{\text{meas,n}}$) may denote an RSRP measurement result (RSRP measurement quality) used for cell reselection. $Q_{\text{offset}}$ may be identical to $Q_{\text{offsets,n}}$ if $Q_{\text{offsets,n}}$ is valid for intra-frequency, and may be 0 if $Q_{\text{offsets,n}}$ is invalid. In addition, $Q_{\text{offset}}$ may be identical to $Q_{\text{offsets,n}} + Q_{\text{offsetfrequency}}$ if $Q_{\text{offsets,n}}$ is valid for intra-frequency, and may be identical to $Q_{\text{offsetfrequency}}$ if $Q_{\text{offsets,n}}$ is invalid. $Q_{\text{offsettemp}}$ may denote an offset temporarily applied to a cell.

- The following conditions should be satisfied in order for the terminal to perform cell reselection by selecting the new cell (for example, the highest ranked cell).

■ If rangeToBestCell is configured in SIB2, the terminal may perform cell selection by selecting the highest ranked cell. Here, rangeToBestCell may denote a value in a specific range.

■ If rangeToBestCell is configured in SIB2, the terminal may perform cell reselection by selecting a cell having the highest number of beams having values greater than absThreshSS-BlocksConsolidation, among cells having R values belonging to rangeToBestCell of the R value of the highest ranked cell (perform cell reselection to the cell with the highest number of beams above the threshold (i.e., absThreshSS-BlocksConsolidation) among the cells whose R value is within rangeToBestCell of the R value of the highest ranked cell). Here, absThreshSS-BlocksConsolidation may be signaled for each NR frequency, and may denote a threshold value for RS index-specific L1 measurement consolidation.

■ A cell satisfying the cell reselection criteria for the TrselectionRAT interval should be better than a current serving cell (the new cell is better than the serving cell according to the cell reselection criteria during a time interval TreselectionRAT).

- The terminal has camped on the current serving cell for over one second.

When cell reselection criteria need to be applied upon the second case, the terminal in the RRC idle mode or the RRC inactive mode may apply lower priority NR Inter-frequency and inter-RAT cell reselection criteria. The lower priority NR Inter-frequency and inter-RAT cell reselection criteria may be described as follows.

- If the $Thresh_{Serving, LowQ}$ is broadcasted through the system information (for example, SIB2) that is broadcasted in a serving cell, and the terminal has camped on the current serving cell for over one second,

● The terminal may determine whether one or multiple cells in each frequency satisfy condition C below and derive a candidate target cell list for each frequency. A $Treselection_{RAT}$ parameter, a $Thresh_{Serving,LowQ}$ parameter, and a $Thresh_{X,LowQ}$ parameter used in condition C may be included in the system information. For example, the parameter (for example, $Thresh_{Serving,LowQ}$) for the serving frequency may be included in SIB2, and in a case of a cell in the NR frequency having a lower priority than that of the serving frequency, SIB4 may include the parameter values (for example, $Treselection_{RAT}$ and $Thresh_{X,LowQ}$). In a case of a cell in the inter-RAT frequency having a lower priority than that of the serving frequency, SIB5 may include the parameter values (for example, $Treselection_{RAT}$ and $Thresh_{X,LowQ}$).

■ Condition C: A case in which for a $Treselection_{RAT}$ interval, a reception quality (Squal) of a current serving cell has a value smaller than $Thresh_{Serving,LowQ}$ and a reception quality (Squal) of a cell in the NR frequency having a lower priority or an E-UTRAN/RAT cell has a value greater than $Thresh_{X,LowQ}$ (The serving frequency fulfils $Squal<Thresh_{Serving,LowQ}$ and a cell of a lower priority NR or E-UTRAN RAT/frequency fulfils $Squal>Thresh_{X,LowQ}$ during a time internal $Treselection_{RAT}$)

- Otherwise,

● The terminal may determine whether one or multiple cells in each frequency satisfy condition D below and derive a candidate target cell list for each frequency. A $Treselection_{RAT}$ parameter, a $Thresh_{Serving,LowP}$ parameter, and a $Thresh_{X,LowP}$ parameter used in condition D may be included in the system information. For example, the parameter (for example, $Thresh_{Serving,LowP}$) for the serving frequency may be included in SIB2, and in a case of a cell in the NR frequency having a lower priority than that of the serving frequency, SIB4 may include the parameter values (for example, $Treselection_{RAT}$ and $Thresh_{X,LowP}$). In a case of a cell in the inter-RAT frequency having a lower priority than that of the serving frequency, SIB5 may include the parameter values (for example, $Treselection_{RAT}$ and $Thresh_{X,LowP}$).

■ Condition D: A case in which the terminal has camped on the current serving cell for over one second (more than 1 second has elapsed since the UE camped on the current serving cell), and for a $Treselection_{RAT}$ interval, a reception level (Srxlev) of a current serving cell has a value smaller than $Thresh_{Serving,LowP}$ and a reception level (Srxlev) of an RAT cell or a cell in the frequency having a lower priority has a value greater than $Thresh_{X,LowP}$ (The serving frequency fulfils $Srxlev<Thresh_{Serving,LowP}$ and a cell of a lower priority RAT/frequency fulfils $Srxlev>Thresh_{X,LowP}$ during a time internal $Treselection_{RAT}$)

Whether there are multiple cells satisfying the lower priority NR Inter-frequency and inter-RAT cell reselection criteria may be determined. If there are multiple cells (if cell reselection criteria need to be applied upon the fourth case caused by the second case), the terminal may additionally derive a cell-specific ranking to perform cell reselection by selecting the highest ranked cell.

When cell reselection criteria need to be applied upon the third case, a cell-specific ranking is derived through the above-described method and cell reselection may be performed by selecting the highest ranked cell.

In operation 5-35, the terminal may perform cell reselection by selecting a final target cell according to the above-described cell reselection evaluation process. In this case, MIB and SIB 1 broadcasted in the corresponding cell are received, and thus it is not indicated that the state of the corresponding cell is barred, and it is not considered that the cell is barred (cell status is "barred" is not indicated or not to be treated as if the cell status is "barred"). A reception level and a reception quality of the corresponding cell are newly derived based on the received SIB 1, whether the cell reselection criteria are satisfied (SrxlevX) AND Squal>0) is determined, and cell reselection can be finally performed by selecting the corresponding cell.

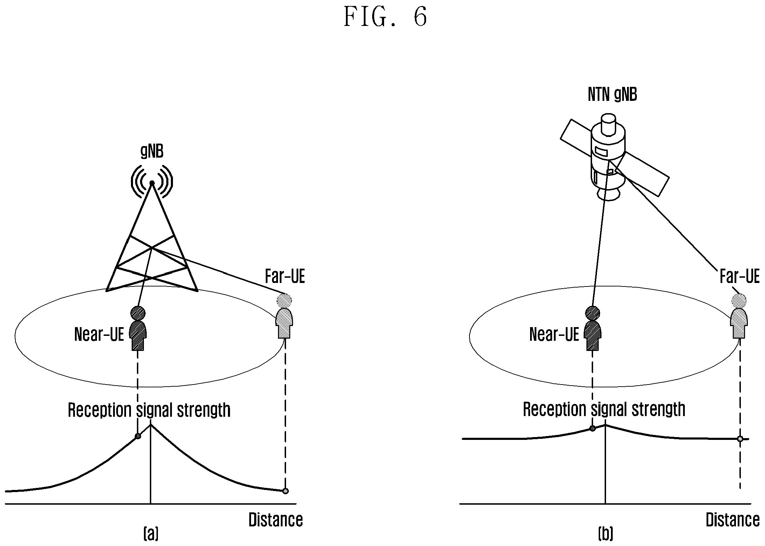

In the above-described conventional terrestrial network, when a case in which the terminal is positioned at the cell center and a case in which the terminal is positioned at the cell edge are compared, there is a large difference in a reception level (Srxlev), a reception quality (Squal), an absolute signal strength (reference signal received power (RSRP)), and a relative signal quality (reference signal received quality (RSRQ)), and thus a problem of performing cell reselection by selecting a neighbor cell in the case in which the terminal is positioned at the cell center, or a frequent ping-pong cell reselection issue may be insignificant. However, when the terminal supports a non-terrestrial network (NTN) (or a satellite network), a problem may occur. A detailed description will be made with reference to FIG. 6.

FIG. 6 illustrates comparison of reception signal strengths between a case where a terminal is positioned at a cell center and a case where a terminal is positioned at a cell edge in a terrestrial network or an NTN.

Referring to part (a) of FIG. 6, in a case where the terminal is positioned at the cell center in the terrestrial network or the cell edge in the terrestrial network, it may be identified that there is a large difference in a measurement value (for example, a reception level (Srxlev), a reception quality (Squal), and an absolute signal strength (reference signal received power (RSRP)) received from the cell in the terrestrial network.

Referring to part (b) of FIG. 6, in a case where the terminal is positioned at the cell center in the satellite network or the cell edge in the satellite network, it may be identified that there are few differences in a measurement value (for example, a reception level (Srxlev), a reception quality (Squal), and an absolute signal strength (reference signal received power (RSRP)) received from the cell in the satellite network. In this case, even when the terminal is positioned at the cell center in the satellite network, a problem such as performing cell reselection by selecting a neighbor cell or a frequent ping-pong cell reselection issue may occur.

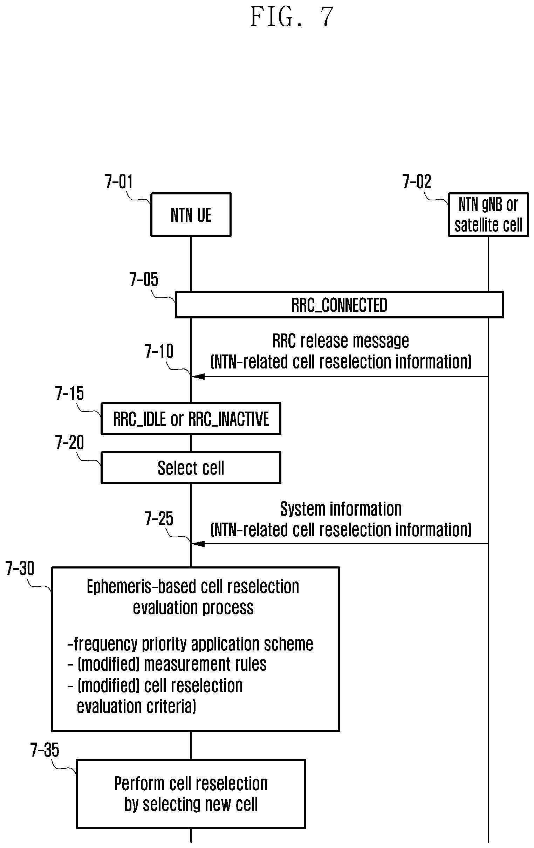

Accordingly, to solve the above-described problem, the disclosure proposes an ephemeris-based cell reselection procedure. Hereinafter, referring to FIG. 7, the ephemeris-based cell reselection procedure proposed by the disclosure will be described.

FIG. 7 illustrates a process of releasing a connection of a terminal and switching a mode of the terminal from an RRC-connected mode (RRC_CONNECTED) to an RRC inactive mode (RRC_INACTIVE) or an RRC idle mode (RRC_IDLE) by a base station, and then performing a satellite cell reselection procedure by the terminal according to an embodiment of the disclosure.

An embodiment of the disclosure proposes a process of performing a satellite cell reselection procedure by a terminal in the RRC inactive mode (RRC_INACTIVE) or the RRC idle mode (RRC_IDLE) in a non-terrestrial network (hereinafter, referred to as "NTN"). Specifically, the terminal supporting the NTN and the satellite cell may have the following characteristics.

- NTN terminal: A terminal supporting the NTN may have global navigation satellite system (GNSS) capability. The terminal operating the GNSS may identify the location of the terminal itself. For example, the terminal operating the GNSS may identify the location of terminal itself, based on geocentric coordinates.
- Satellite cell: A satellite cell may provide ephemeris information to the terminal supporting the NTN through system information. For example, the ephemeris information may mean satellite location information. The ephemeris information may be provided to the terminal supporting the NTN through newly defined system information or previously defined system information. The satellite cell may be connected to an NR base station, and may forward information provided by the NR base station to the NTN. In the disclosure, the satellite cell may be also referred to as "NTN base station".

If the terminal supporting the NTN does not operate the GNSS, a cell reselection procedure may be performed according to the above-described embodiment. That is, the terminal which cannot identify the location of the terminal itself may perform the cell reselection procedure according to the above-described embodiment. Unlike this, the terminal supporting the NTN operates the GNSS, the terminal may perform the cell reselection procedure by using the location of the terminal itself and the ephemeris information provided by the base station. That is, the terminal which can identify the location of the terminal itself may perform the cell reselection procedure by using the location of the terminal itself and the ephemeris information provided by the base station. In the disclosure, the performing of the cell reselection procedure by suing the ephemeris information provided by the base station may be referred to as ephemeris-based cell reselection. In the disclosure, as compared to the cell reselection parameter described in the embodiment above, a cell reselection parameter for the NTN terminal has the same purpose in that the parameter is used for cell reselection, but the cell reselection parameter for the NTN terminal may be newly introduced, and such a new cell reselection parameter may be broadcasted through system information. Specifically, if the cell reselection parameter for the NTN terminal is not newly introduced, the NTN terminal may perform a cell reselection evaluation process by applying the cell reselection parameter described in the embodiment above. If the cell reselection parameter for the NTN terminal is newly introduced and is broadcasted through system information, the NTN terminal may perform the cell reselection process by applying the cell reselection parameter newly introduced for cell reselection. Hereinafter, for convenience of description in the disclosure, a case in which a cell reselection parameter is newly introduced and the terminal performs a cell reselection procedure, based on the newly introduced cell reselection parameter is mainly described. However, the case is merely provided for convenience of description, and the disclosure is not limited thereto.

Referring to FIG. 7, an NTN terminal 7-01 may establish an RRC connection with an NTN gNB or a satellite cell 7-02 and may thus be in an RRC-connected mode (RRC_CONNECTED) (operation 7-05).

In operation 7-10, the terminal 7-01 in the RRC-connected mode may receive an RRC release message (for example, RRCRelease) from the NTN gNB or the satellite cell 7-02. The message may store (or include) configuration information (for example, suspendConfig) for transition into an RRC inactive mode. Alternatively, the message may store one piece of cell reselection priority configuration information per frequency for each RAT (for example, NR, EUTRA, etc.) and a timer value (for example, a t320 value) commonly applicable regardless of the RAT. In the disclosure, the message may include an indicator indicating whether a frequency is a frequency supporting the NTN, a predetermined cell identifier (for example, a physical cell ID) for indicating a frequency-specific satellite cell, a satellite type (low orbit satellite, a geostationary satellite, HAPS, etc.), or an indicator, an information element, etc. which can enable or disable determination on whether to perform measurement according to a distance between the terminal and a serving satellite in consideration of at least one of $S_{IntraSearchP}$, $S_{IntraSearchQ}$, $S_{nonIntraSearchP}$, and $S_{nonIntraSearchQ}$ applied for a measurement rule.

In operation 7-15, the terminal 7-01 having received the RRC release message may transition to the RRC idle mode or the RRC inactive mode. If the configuration information for transition to the inactive mode is stored in the RRC release message, the terminal may apply the configuration information to transition to the RRC inactive mode. Otherwise, the terminal may transition to the RRC idle mode.

In operation 7-20, the terminal 7-01 in the RRC idle mode or the RRC inactive mode may perform a cell selection process. The cell selection process may follow the above-described embodiment.

In operation 7-25, the terminal 7-01 may acquire/receive system information (for example, SIB3, SIB4, SIB5, etc.) broadcasted by the NTN gNB or the satellite cell 7-02 to perform the cell reselection procedure. In an embodiment of the disclosure, in addition to the information specified in the above-described embodiment, the NTN gNB or the satellite cell 7-02 may broadcast the following information through the existing system information or new system information.

- Ephemeris information of a serving (satellite) cell (for example, SIB2 or new SIB)
- Ephemeris information of neighbor (satellite) cells in a predetermined NR frequency (for example, SIB3, SIB4, or new SIB)
   ■ The ephemeris information may include a (satellite) cell identifier (for example, PCI) which can identify a mapped (satellite) cell.
- A predetermined distance threshold value (Dserving) between the terminal and a serving (satellite) cell, and an offset value ($Qoffset_{location,serving}$) (for example, SIB2 or new SIB)
   ■ For the $Qoffset_{location,serving}$, if a distance between the terminal and the serving (satellite) cell has a value smaller than Dserving or a value equal to or smaller than Dserving, the terminal may apply the $Qoffset_{location,serving}$ when driving a serving cell ranking.
- A predetermined distance threshold value (Dneighbor) between the terminal and a neighbor (satellite) cell, and an offset value ($Qoffset_{location,neighbor}$) (for example, SIB3, SIB4, or new SIB)

   ■ For the $Qoffset_{location,neighbor}$, if a distance between the terminal and the neighbor (satellite) cell has a value smaller than Dneighbor or a value equal to or smaller than Dneighbor, the terminal may apply the $Qoffset_{location,neighbor}$ when deriving a neighbor cell ranking.
   ■ The Dneighbor value may be signaled for each frequency, or may be signaled for each cell.
   ■ The $Qoffset_{location,neighbor}$ may be signaled for each frequency, or may be signaled for each cell.

- The above-described Dserving and Dneighbor may be signaled as a single value.
- The above-described offsets (for example, $Qoffset_{location,serving}$ and $Qoffset_{location,neighbor}$) may be signaled as different values according to the satellite type (low orbit satellite, geostationary satellite, HAPS, etc.).
- An indicator, an information element, etc. which can enable (or active) or disable (or deactivate) determination on whether to perform measurement according to a distance between the terminal and the serving satellite in consideration of at least one of $S_{IntraSearchP}$, $S_{IntraSearchQ}$, $S_{nonIntraSearchP}$, and $S_{nonIntraSearchQ}$ may be included.

For example, the determination on whether to perform intra-frequency measurement, inter-frequency measurement, or inter-RAT frequency measurement, based on the distance between the terminal and the serving satellite may be enabled or disabled.

In operation 7-30, the terminal 7-01 may perform ephemeris-based cell reselection evaluation process. The cell reselection evaluation process may mean a series of procedures below:

- Frequency priority application scheme (Reselection priorities handling)
- Measurement rules for cell reselection (According to an embodiment, the rules may be modified measurement rules).
- Cell reselection evaluation criteria (Cell reselection criteria)

The frequency priority application method may follow the above-described embodiment.

The measurement rule may follow the above-described embodiment. Alternatively, in an embodiment of the disclosure, the above-described measurement rule may be applied as a modified measurement rule in which whether to perform measurement for a neighbor (satellite) cell or a frequency to which the neighbor (satellite) cell belongs is enabled or disabled based on the distance between the terminal and a serving (satellite) cell. For example, measurement for a neighbor cell may be performed only when a distance between the terminal and the serving (satellite cell) is equal to or less than a predetermined distance or is less than a predetermined distance, without determining whether to perform measurement for neighbor cells according to a measurement value of the serving (satellite) cell like in the existing rule. A distance threshold value for a predetermined distance reference may be provided to the terminal by the base station through system information or an RRC release message. The distance threshold value may mean the above-described Dserving, or may mean a separate predetermined distance threshold value. The terminal itself may enable or disable determination on whether to perform measurement, based the existing measurement rule according to the distance between the terminal and the serving (satellite) cell, or the base station may explicitly enable or disable the determination on whether to perform measurement according to the distance between the terminal and the serving (satellite) cell (for example, determining whether to perform measurement for a serving cell, based on a distance between the terminal and the serving (satellite) cell, may be enabled or disable through an indicator). Alternatively, in an embodiment of the disclosure, the above-described measurement rule may be applied as a modified measurement rule in which whether to perform measurement for a neighbor cell or a frequency to which the neighbor cell belongs, based on a distance between the terminal and the neighbor (satellite) cell is enabled or disabled. For example, the measurement for the neighbor cell or the frequency to which the neighbor cell belongs may be performed only when a distance between the terminal and the neighbor (satellite) cell is less than or equal to a predetermined distance or is less than a predetermined distance. The distance threshold for the predetermined distance reference may be provided to the terminal by the base station through the system information or RRC release message. The distance threshold value may mean the above-described Dneighbor, or may mean a separate predetermined distance threshold value. The terminal itself may enable or disable determination on whether to perform measurement for a neighbor cell according to the distance between the terminal and the neighbor (satellite) cell, or the base station may explicitly enable or disable the determination on whether to perform measurement for a neighbor cell according to the distance between the terminal and the neighbor (satellite) cell (for example, whether to perform measurement for a neighbor cell may be enabled or disable through an indicator).

The cell reselection evaluation criteria may follow the above-described embodiment. When the terminal according to an embodiment of the disclosure needs to derive a cell ranking, the cell ranking may be derived through Equation 3.

[Equation 3]

$$R_s = Q_{meas,s} + Q_{hyst} - Qoffset_{temp} + Qoffset_{location, serving}$$
$$R_n = Q_{meas,n} - Qoffset - Qoffset_{temp} + Qoffset_{location,neighbor}$$

- Here,

  ■ $Qoffset_{location, serving}$: If the distance between the terminal and the serving (satellite) cell has a value smaller than a distance threshold value (for example, Dserving) or has a value equal to or smaller than a distance threshold value, $Qoffset_{location, serving}$ may be applied to Equation 3. Alternatively, if the distance between the terminal and the serving (satellite) cell has a value greater than a distance threshold value (for example, Dserving) or has a value equal to or greater than a distance threshold value, $Qoffset_{location, serving}$ is not used for deriving the cell ranking, and in this case, $R_s$ may be derived according to the equation for $R_s$ in Equation 2.

  ■ $Qoffset_{location, neighbor}$: If the distance between the terminal and the neighbor (satellite) cell has a value smaller than a distance threshold value (for example, Dneighbor) or has a value equal to or smaller than a distance threshold value, Qoffset$_{location, neighbor}$ may be applied to Equation 3. Alternatively, if the distance between the terminal and the neighbor (satellite) cell has a value greater than a distance threshold value (for example, Dneighbor) or has a value equal to or greater than a distance threshold value, Qoffset$_{location, neighbor}$ is not used for deriving the cell ranking, and in this case, R$_n$ may be derived according to the equation for R$_n$ in Equation 2.

The Qoffset$_{location, serving}$ and Qoffset$_{location, neighbor}$ may be applied only when a satellite frequency is indicated, or may be also applied only for a predetermined neighbor cell indicated in the satellite frequency. That is, it may mean that the cell ranking is derived without applying the offsets to cells other than the satellite cell. In this case, for cells other than the satellite cell, the cell ranking may be derived according to Equation 2. In addition, according to an embodiment, for the offset (for example, Qoffset$_{location, serving}$ or Qoffset$_{location, neighbor}$), different values may be applied according the satellite type.

In operation 7-35, the terminal 7-01 according to an embodiment of the disclosure may perform reselection by selecting the highest ranked cell. Alternatively, the terminal may also perform reselection by selecting the highest ranked cell from among cells satisfying the distance condition. If there is no cell satisfying the distance condition, the terminal may perform cell reselection by selecting a cell having the shortest distance between the terminal and the cell from among cells satisfying S criteria. Alternatively, the terminal may perform cell reselection by selecting a cell having the shorted distance between the terminal and the cell. Here, the cell satisfying the distance condition may mean a cell having a distance from the terminal is less than (or equal to or less than) a predetermined distance. Here, the predetermined distance may be one of the above-described distance thresholds, and may be a separately configured value. Alternatively, if the offset (for example, Qoffsetiocation, $_{serving}$ or Qoffsetiocation, $_{neighbor}$) is not introduced, the terminal may perform cell reselection by selecting the highest ranked cell from among cells satisfying a distance condition between the terminal and the cell.

An ephemeris-based cell reselection procedure according to an embodiment of the disclosure may be performed in consideration of at least one of the following characteristics.

1. Each of nonIntraSearch (determining whether to perform inter-frequency measurement or perform inter-RAT frequency measurement) and intraSearch (determining whether to perform intra-frequency measurement) may be enabled or disabled based on a distance from a serving satellite, rather than a signal strength (alternatively, enabling or disabling may be performed in consideration of both nonIntraSearch and intraSearch).

2. A cell edge condition may be defined based on a distance. For example, whether the above-described cell selection criteria (S criteria) are satisfied may be defined based on the distance.

3. In the ephemeris-based cell reselection, an ephemeris-based offset (ephemeris offset) may be applied only when a ranking of a neighbor cell corresponding to a predetermined frequency is measured (for example, the ephemeris-based offset is applied only for a neighbor frequency indicated as a satellite frequency, and a cell ranking for a cell in the corresponding frequency may be determined).

4. A physical cell ID (PCI) of neighbor satellite cells in the serving frequency may be identified, and the terminal may apply the ephemeris-based offset (ephemeris offset) (for example, the above-described Qoffset$_{location, serving}$ or Qoffset$_{location, neighbor}$) to neighbor satellite cells to determine a cell ranking, and may not apply the ephemeris-based offset to non-satellite cells (for example, cells other than the satellite cell) to determine the cell ranking.

5. The offset (for example, Qoffset$_{location, serving}$ or Qoffset$_{location, neighbor}$) may have (or may be determined as) different values according to a satellite type (for example, low orbit satellite, geostationary satellite, HAPS, etc.).

6. The terminal may perform cell reselection by selecting the highest ranked cell, may perform cell reselection by selecting the highest ranked cell from among cells satisfying a predetermined distance condition, or may perform cell reselection by selecting a cell having the shortest distance between the terminal and the cell (among cells satisfying S criteria).

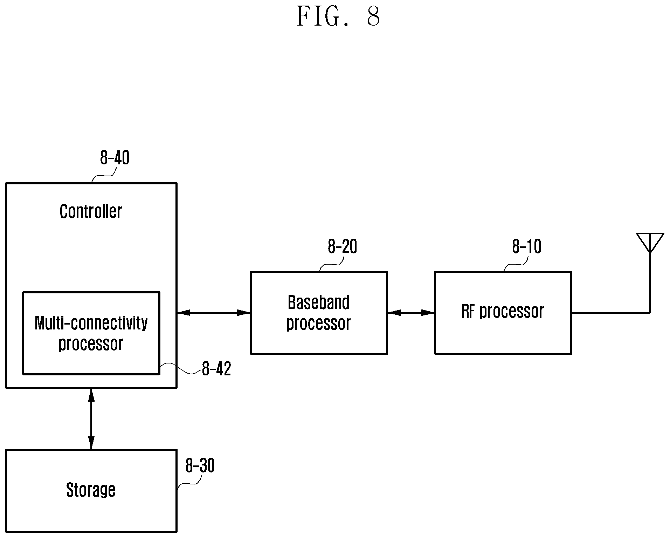

FIG. 8 is a block diagram illustrating a structure of a terminal according to an embodiment of the disclosure.

Referring to FIG. 8, the terminal may include a radio frequency (RF) processor 8-10, a baseband processor 8-20, a storage 8-30, and a controller 8-40.

The RF processor 8-10 performs a function for transmitting or receiving a signal through a radio channel, such as signal band conversion, amplification, and the like. That is, the RF processor 8-10 up-converts a baseband signal provided from the baseband processor 8-20 to an RF-band signal and then transmits the RF-band signal through an antenna, and down-converts an RF-band signal received through an antenna into a baseband signal. For example, the RF processor 8-10 may include a transmission filter, a reception filter, an amplifier, a mixer, an oscillator, a digital-to-analog converter (DAC), an analog-to-digital converter (ADC), and the like. Although only a single antenna is illustrated in FIG. 8, the terminal may include multiple antennas. In addition, the RF processor 8-10 may include multiple RF chains. Furthermore, the RF processor 8-10 may perform beamforming. For beamforming, the RF processor 8-10 may adjust the phases and amplitudes of signals transmitted or received through multiple antennas or antenna elements. The RF processor may also perform MIMO and may receive multiple layers during the MIMO operation.

The baseband processor 8-20 performs a function of conversion between a baseband signal and a bitstream according to the physical layer specifications of a system. For example, during data transmission, the baseband processor 8-20 generates complex symbols by encoding and modulating a transmission bitstream. In addition, during data reception, the baseband processor 8-20 reconstructs a received bitstream by demodulating and decoding a baseband signal provided from the RF processor 8-10. For example, according to an orthogonal frequency-division multiplexing (OFDM) scheme, during data transmission, the baseband processor 8-20 generates complex symbols by encoding and modulating a transmission bitstream, maps the complex symbols to subcarriers, and then configures OFDM symbols by performing inverse fast Fourier transformation (IFFT) operation and cyclic prefix (CP) insertion. In addition, during data reception, the baseband processor 8-20 segments a baseband signal provided from the RF processor 8-10 into units of OFDM symbols, reconstructs signals mapped to subcarriers through fast Fourier transformation (FFT), and then reconstructs a received bitstream through demodulation and decoding.

The baseband processor 8-20 and the RF processor 8-10 transmit and receive signals as described above. Accordingly, each of the baseband processor 8-20 and the RF processor 8-10 may also be referred to as a transmitter, a receiver, a transceiver, or a communication unit. Furthermore, at least one of the baseband processor 8-20 and the RF processor 8-10 may include multiple communication modules to support multiple different radio-access technologies. In addition, at least one of the baseband processor 8-20 and the RF processor 8-10 may include multiple communication modules to process signals of different frequency bands. For example, the different radio-access technologies may include a wireless LAN (e.g., IEEE 802.11), a cellular network (e.g., LTE), and the like. In addition, the different frequency bands may include a superhigh frequency (SHF) (e.g., 2.NRHz, NRHz) band and a millimeter-wave (mmWave) (e.g., 60 GHz) band.

The storage 8-30 stores data such as basic programs, applications, configuration information, or the like for the operation of the terminal. Specifically, the storage 8-30 may store information related to a second connection node for performing wireless communication by using a second wireless connection technology. In addition, the storage 8-30 provides the stored data upon a request from the controller 8-40.

The controller 8-40 controls the overall operation of the terminal. For example, the controller 8-40 transmits or receives signals through the baseband processor 8-20 and the RF processor 8-10. In addition, the controller 8-40 records and reads data on or from the storage 8-40. To this end, the controller 8-40 may include at least one processor. For example, the controller 8-40 may include a communication processor (CP) for controlling communication and an application processor (AP) for controlling an upper layer such as an application.

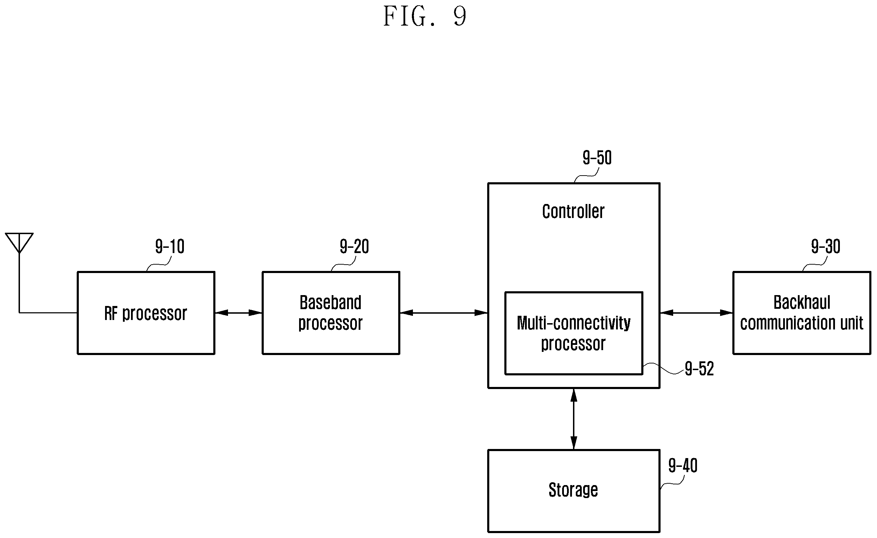

FIG. 9 is a diagram illustrating a structure of a base station according to an embodiment of the disclosure.

Referring to FIG. 9, the base station includes an RF processor 9-10, a baseband processor 9-20, a backhaul communication unit 9-30, a storage 9-40, and a controller 9-50.

The RF processor 9-10 performs a function of transmitting or receiving a signal through a radio channel, such as signal band conversion and amplification. That is, the RF processor 9-10 up-converts a baseband signal provided from the baseband processor 9-20 to an RF-band signal and then transmits the converted RF-band signal through an antenna, and down-converts an RF-band signal received through an antenna to a baseband signal. For example, the RF processor 9-10 may include a transmission filter, a reception filter, an amplifier, a mixer, an oscillator, a DAC, an ADC, and the like. Although only a single antenna is illustrated in FIG. 9, the first access node may include multiple antennas. In addition, the RF processor 9-10 may include multiple RF chains. Furthermore, the RF processor 9-10 may perform beamforming. For beamforming, the RF processor 9-10 may adjust phases and amplitudes of signals transmitted or received through multiple antennas or antenna elements. The RF processor 9-10 may perform a downlink MIMO operation by transmitting one or more layers.

The baseband processor 9-20 performs conversion between a baseband signal and a bitstream according to the physical layer specifications of a first radio-access technology. For example, during data transmission, the baseband processor 9-20 generates complex symbols by encoding and modulating a transmission bitstream. In addition, during data reception, the baseband processor 9-20 reconstructs a received bitstream by demodulating and decoding a baseband signal provided from the RF processor 9-10. For example, according to an OFDM scheme, during data transmission, the baseband processor 9-20 generates complex symbols by encoding and modulating a transmission bitstream, maps the complex symbols to subcarriers, and then configures OFDM symbols by performing IFFT operation and CP insertion. In addition, during data reception, the baseband processor 9-20 segments a baseband signal provided from the RF processor 9-10 into units of OFDM symbols, reconstructs signals mapped to subcarriers by performing FFT operation, and then reconstructs a received bitstream through demodulation and decoding. The baseband processor 9-20 and the RF processor 9-10 transmits and receives signals as described above. Accordingly, each of the baseband processor 9-20 and the RF processor 9-10 may also be referred to as a transmitter, a receiver, a transceiver, a communication unit, or a wireless communication unit.

The backhaul communication unit 9-30 provides an interface for performing communication with other nodes in a network. That is, the backhaul communication unit 9-30 converts a bitstream transmitted from a primary base station to another node, for example, a secondary base station, a core network, and the like, into a physical signal, and converts a physical signal received from another node into a bitstream.

The storage 9-40 stores data such as basic programs, applications, configuration information, or the like for the operation of the primary base station. The storage 9-40 may store information on a bearer allocated to a connected terminal, a measurement result reported from the connected terminal, and the like. In addition, the storage 9-40 may store information which serves as criteria for determining whether to provide or stop providing multi-connectivity to the terminal. In addition, the storage 9-40 provides the stored data upon a request from the controller 9-50.

The controller 9-50 controls the overall operation of the base station. For example, the controller 9-50 transmits or receives a signal through the baseband processor 9-20 and the RF processor 9-10 or through the backhaul communication unit 9-30. In addition, the controller 9-50 records and reads data on or from the storage 9-40. To this end, the controller 9-50 may include at least one processor.

**Claims**

1. A method of a terminal in a non-terrestrial network (NTN), the method comprising:

   receiving, from a serving cell of a base station, configuration information comprising at least one cell reselection parameter;
   identifying a cell reselection condition, based on the at least one cell reselection parameter and position information of the serving cell; and
   performing reselection by selecting a new cell, based on the cell reselection condition.

2. The method of claim 1, wherein the identifying of the cell reselection condition comprises:

   determining a rank of the serving cell, based on a distance between the serving cell and the terminal; and
   determining a rank of a neighbor cell, based on a distance between the neighbor cell and the terminal, and
   wherein the serving cell and the neighbor cell are satellite cells.

3. The method of claim 2, wherein in case that the distance between the serving cell and the terminal has a value smaller than or equal to a first threshold value, the rank of the serving cell is determined based on a measurement result of the serving cell and an offset associated with a position of the serving cell, and
   wherein in case that the distance between the serving cell and the terminal has a value greater than the first threshold value, the rank of the serving cell is determined based on the measurement result of the serving cell.

4. The method of claim 2, wherein in case that the distance between the neighbor cell and the terminal has a value smaller than or equal to a second threshold value, the rank of the neighbor cell is determined based on a measurement result of the neighbor cell and an offset associated with a position of the neighbor cell, and
   wherein in case that the distance between the neighbor cell and the terminal has a value greater than the second threshold value, the rank of the neighbor cell is determined based on the measurement result of the neighbor cell.

5. The method of claim 2, wherein the new cell is a cell having a highest rank, among the serving cell and the neighbor cell, or a cell having a highest rank, among cells satisfying a distance condition, among the serving cell and the neighbor cell.

6. The method of claim 1, wherein the at least one cell reselection parameter comprises an indicator indicating enabling or disabling of determination on whether to perform measurement for a neighbor cell, based on the position information of the serving cell,

   wherein in case that the indicator indicates enabling, whether to perform the measurement for the neighbor cell is determined based on a distance between the serving cell and the terminal, and
   wherein in case that the indicator indicates disabling, whether to perform the measurement for the neighbor cell is determined based on a threshold value associated with the measurement for the neighbor cell.

7. The method of claim 6, wherein in case that the indicator indicates enabling and the distance between the serving cell and the terminal has a value smaller than or equal to a third threshold value, the measurement for the neighbor cell is performed, and
   wherein in case that the indicator indicates enabling and the distance between the serving cell and the terminal has a value greater than the third threshold value, the measurement for the neighbor cell is omitted.

8. A terminal of a non-terrestrial network (NTN), the terminal comprising:

   a transceiver; and
   a controller connected to the transceiver,
   wherein the controller is configured to:

   receive, from a serving cell of a base station, configuration information comprising at least one cell reselection parameter;
   identify a cell reselection condition, based on the at least one cell reselection parameter and position information of the serving cell; and
   perform reselection by selecting a new cell, based on the cell reselection condition.

9. The terminal of claim 8, wherein the controller is configured to:

   determine a rank of the serving cell, based on a distance between the serving cell and the terminal; and
   determine a rank of a neighbor cell, based on a distance between the neighbor cell and the terminal, and
   wherein the serving cell and the neighbor cell are satellite cells.

10. The terminal of claim 9, wherein in case that the distance between the serving cell and the terminal has a value smaller than or equal to a first threshold value, the rank of the serving cell is determined based on a measurement result of the serving cell and an offset associated with a position of the serving cell, and
    wherein in case that the distance between the serving cell and the terminal has a value greater than the first threshold value, the rank of the serving cell is determined based on the measurement result of the serving cell.

11. The terminal of claim 9, wherein in case that the distance between the neighbor cell and the terminal has a value smaller than or equal to a second threshold value, the rank of the neighbor cell is determined based on a measurement result of the neighbor cell and an offset associated with a position of the neighbor cell, and
    wherein in case that the distance between the neighbor cell and the terminal has a value greater than the second threshold value, the rank of the neighbor cell is determined based on the measurement result of the neighbor cell.

12. The terminal of claim 9, wherein the new cell is a cell having a highest rank, among the serving cell and the neighbor cell, or a cell having a highest rank, among cells satisfying a distance condition, among the serving cell and the neighbor cell.

13. The terminal of claim 8, wherein the at least one cell reselection parameter comprises an indicator indicating enabling or disabling of determination on whether to perform measurement for a neighbor cell, based on the position information of the serving cell,

    wherein in case that the indicator indicates enabling, whether to perform the measurement for the neighbor cell is determined based on a distance between the serving cell and the terminal, and
    wherein in case that the indicator indicates disabling, whether to perform the measurement for the neighbor cell is determined based on a threshold value associated with the measurement for the neighbor cell.

14. The terminal of claim 13, wherein in case that the indicator indicates enabling and the distance between the serving cell and the terminal has a value smaller than or equal to a third threshold value, the measurement for the neighbor cell is performed, and
    wherein in case that the indicator indicates enabling and the distance between the serving cell and the terminal has a value greater than the third threshold value, the measurement for the neighbor cell is omitted.

# FIG. 1

FIG. 2

|  | UE |  |  | LTE eNB |
|---|---|---|---|---|
| 2-05 | PDCP | | 2-40 | PDCP |
| 2-10 | RLC | | 2-35 | RLC |
| 2-15 | MAC | | 2-30 | MAC |
| 2-20 | PHY | | 2-25 | PHY |

# FIG. 3

FIG. 4

|  | UE |
|---|---|
| 4-01 | NR SDAP |
| 4-05 | NR PDCP |
| 4-10 | NR RLC |
| 4-15 | NR MAC |
| 4-20 | NR PHY |

|  | NR gNB |
|---|---|
| 4-45 | NR SDAP |
| 4-40 | NR PDCP |
| 4-35 | NR RLC |
| 4-30 | NR MAC |
| 4-25 | NR PHY |

# FIG. 5

5-01

UE

5-02

gNB (NR cell)

5-05

RRC_CONNECTED

5-10 RRC release message

5-15 RRC_IDLE or RRC_INACTIVE

5-20 Select cell

5-25 System information

5-30 Cell reselection evaluation process
-frequency priority application scheme
- measurement rules
- cell reselection evaluation criteria

5-35 Perform cell reselection
by selecting new cell

FIG. 6

# FIG. 7

**7-01** NTN UE

**7-02** NTN gNB or satellite cell

**7-05** RRC_CONNECTED

**7-10** RRC release message
(NTN-related cell reselection information)

**7-15** RRC_IDLE or RRC_INACTIVE

**7-20** Select cell

**7-25** System information
(NTN-related cell reselection information)

**7-30** Ephemeris-based cell reselection
evaluation process

-frequency priority application scheme
- (modified) measurement rules
- (modified) cell reselection
  evaluation criteria)

**7-35** Perform cell reselection
by selecting new cell

FIG. 8

# FIG. 9

RF processor (9-10) ↔ Baseband processor (9-20) ↔ Controller (9-50) [Multi-connectivity processor (9-52)] ↔ Backhaul communication unit (9-30); Controller ↔ Storage (9-40)

EP 4 135 217 A1

## INTERNATIONAL SEARCH REPORT

| | International application No. |
|---|---|
| | **PCT/KR2021/014860** |

### A. CLASSIFICATION OF SUBJECT MATTER

**H04B 7/185**(2006.01)i; **H04W 36/00**(2009.01)i; **H04W 36/22**(2009.01)i; **H04W 84/06**(2009.01)i

According to International Patent Classification (IPC) or to both national classification and IPC

### B. FIELDS SEARCHED

Minimum documentation searched (classification system followed by classification symbols)

H04B 7/185(2006.01); H04B 7/212(2006.01); H04W 36/00(2009.01); H04W 36/08(2009.01); H04W 36/26(2009.01); H04W 36/30(2009.01); H04W 36/32(2009.01); H04W 36/36(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN(non-terrestrial network), 서빙 셀(serving cell), 셀 재선택(cell reselect), 파라미터(parameter), 위치 정보(location information)

### C. DOCUMENTS CONSIDERED TO BE RELEVANT

| Category* | Citation of document, with indication, where appropriate, of the relevant passages | Relevant to claim No. |
|---|---|---|
| Y | KR 10-2017-0115076 A (HUAWEI TECHNOLOGIES CO., LTD.) 16 October 2017 (2017-10-16)<br>See paragraphs [0158]-[0162]; claims 1 and 4; and figure 2. | 1-5,8-12 |
| A | | 6-7,13-14 |
| Y | JP 2000-068917 A (ICO SERVICES LTD.) 03 March 2000 (2000-03-03)<br>See paragraph [0010]; and claim 25. | 1-5,8-12 |
| Y | JP 2017-022634 A (NEC COMMUN SYST LTD.) 26 January 2017 (2017-01-26)<br>See paragraphs [0047]-[0048]; and claims 1-2. | 2-5,9-12 |
| A | KR 10-2008-0013186 A (SAMSUNG ELECTRONICS CO., LTD.) 13 February 2008 (2008-02-13)<br>See paragraphs [0044]-[0049]; and figure 2. | 1-14 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2022** | **25 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/014860**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2020-0110327 A (GUANGDONG OPPO MOBILE TELECOMMUNICATIONS CORP., LTD.) 23 September 2020 (2020-09-23)<br>See paragraphs [0050]-[0061]; and figure 2. | 1-14 |

Form PCT/ISA/210 (second sheet) (July 2019)

INTERNATIONAL SEARCH REPORT
Information on patent family members

International application No.

**PCT/KR2021/014860**

| Patent document cited in search report | | | Publication date (day/month/year) | Patent family member(s) | | | Publication date (day/month/year) |
|---|---|---|---|---|---|---|---|
| KR | 10-2017-0115076 | A | 16 October 2017 | AU | 2015-381633 | A1 | 07 September 2017 |
| | | | | AU | 2015-381633 | B2 | 01 August 2019 |
| | | | | BR | 112017016919 | A2 | 05 June 2018 |
| | | | | CN | 107113681 | A | 29 August 2017 |
| | | | | CN | 107113681 | B | 09 April 2021 |
| | | | | CN | 110366224 | A | 22 October 2019 |
| | | | | CN | 110366224 | B | 07 August 2020 |
| | | | | CN | 113301616 | A | 24 August 2021 |
| | | | | CN | 113301617 | A | 24 August 2021 |
| | | | | EP | 3249973 | A1 | 29 November 2017 |
| | | | | EP | 3249973 | A4 | 17 January 2018 |
| | | | | EP | 3249973 | B1 | 24 April 2019 |
| | | | | EP | 3582551 | A1 | 18 December 2019 |
| | | | | EP | 3582551 | B1 | 19 May 2021 |
| | | | | EP | 3855805 | A1 | 28 July 2021 |
| | | | | ES | 2731629 | T3 | 18 November 2019 |
| | | | | JP | 2018-504860 | A | 15 February 2018 |
| | | | | JP | 6637056 | B2 | 29 January 2020 |
| | | | | KR | 10-2084024 | B1 | 03 March 2020 |
| | | | | RU | 2668071 | C1 | 26 September 2018 |
| | | | | US | 2017-0339612 | A1 | 23 November 2017 |
| | | | | WO | 2016-123809 | A1 | 11 August 2016 |
| JP | 2000-068917 | A | 03 March 2000 | EP | 0964531 | A1 | 15 December 1999 |
| JP | 2017-022634 | A | 26 January 2017 | JP | 6608636 | B2 | 20 November 2019 |
| KR | 10-2008-0013186 | A | 13 February 2008 | CN | 101166307 | A | 23 April 2008 |
| | | | | EP | 1887720 | A2 | 13 February 2008 |
| | | | | EP | 1887720 | A3 | 04 July 2012 |
| | | | | KR | 10-0842621 | B1 | 30 June 2008 |
| | | | | US | 2008-0031195 | A1 | 07 February 2008 |
| KR | 10-2020-0110327 | A | 23 September 2020 | AU | 2018-403657 | A1 | 30 July 2020 |
| | | | | BR | 112020014362 | A2 | 01 December 2020 |
| | | | | CA | 3088810 | A1 | 25 July 2019 |
| | | | | CN | 111226461 | A | 02 June 2020 |
| | | | | CN | 111641982 | A | 08 September 2020 |
| | | | | EP | 3731562 | A1 | 28 October 2020 |
| | | | | EP | 3731562 | A4 | 18 November 2020 |
| | | | | JP | 2021-518062 | A | 29 July 2021 |
| | | | | RU | 2752238 | C1 | 23 July 2021 |
| | | | | SG | 11202006781 | PA | 28 August 2020 |
| | | | | TW | 201933935 | A | 16 August 2019 |
| | | | | US | 2020-0314720 | A1 | 01 October 2020 |
| | | | | WO | 2019-140636 | A1 | 25 July 2019 |

Form PCT/ISA/210 (patent family annex) (July 2019)